# EUROPEAN PATENT APPLICATION

(11) **EP 1 882 921 A1**
(43) Date of publication of application: **30.01.2008**
(21) Application number: 06117384.5
(22) Date of filing: 18.07.2006
(51) Int. Cl.: G01L 5/10, G01L 25/00

(54) **Measuring tool for measuring tension in a saw blade**

(71) Applicant: Hansen, Soren Luja, 5300 Kerteminde (DK)
(72) Inventor: Hansen, Soren Luja, 5300 Kerteminde (DK)
(74) Representative: Holme Patent A/S

(57) **Abstract**

A measuring tool (1) for measuring tension in a saw blade (2) comprises two clamps (3) for clamping the tool upon the saw blade (2), a clamp holder (14) for holding the clamps (3) in a way that allows changing of distance between the clamps (3), and a gauge (18) for measuring such chancing. The clamp holder (14) comprises two bars (15a,b) displaceably or pivotally connected at one end with each other and each equipped at the other end with a cantilever arm (16) mounting a clamp (3). The cantilever arms (16) are connected with the gauge (18) by means of each their tension rod (17). The measuring tool is simple and inexpensive. By means of the measuring tool it is possible to measure tensions in a saw blade easily and quickly and with optimal accuracy.

## Description

The invention relates to a measuring tool for measuring tension in a saw blade and of that kind which comprises two clamps for clamping the tool upon the saw blade, a clamp holder for holding the clamps in a way which allows changing of distance between the clamps, and a gauge for measuring such chancing.

The invention also relates to a method for measuring tension in a saw blade by using said measuring tool and a method for calibrating the measuring tool.

Sawing machines in form of band saws or frame saws are widely used within for example the woodworking industry and the metalworking industry.

The sawing blades of these saw machines should be carefully tensioned and the tension should moreover be distributed in a specific way over the width of the saw blade in order to ensure that the object in question is cut correctly, that the saw blade achieves a long lifetime and that malfunctioning of the sawing machines is avoided.

An incorrectly stretched saw blade could thus cause the cutting edge of the saw blade to deviate from the desired cutting line with the result that an uneven and improper cut is performed. In order to obtain a straight cut, the tension of the toothed side of the saw blade should be larger than the tension of the rear side. The difference could be between 15% and 40%.

The operator frequently measures the tension in a saw blade by simply listening to the sound, which the saw blade makes when being stroked, or by manually feeling the resistance, which the saw blade makes against being bended. It is however, by using these simple measuring methods, impossible to give even tolerable information on the state of tension in the saw blade. Adjusting of the tensions therefore have to take place in a haphazardly way.

U.S. Patent No. 4,213,334 discloses a measuring tool for measuring the tension in a saw blade of a band saw machine. The tool is in the main consisting of first and second arms arranged on a spacer. The first arm is immovably fixed upon the spacer and has a scale arm with a scale. The second arm is pivotally mounted on the spacer and has a pointer for showing the measured value on the scale of the scale arm. The two arms are moreover interconnected by means of a tension spring. The first arm has furthermore a groove for receiving a piece of the saw blade, and the second arm has a seat for receiving a nose on a section of the housing of the band saw machine.

The second arm will swing around its pivot in dependence of the tension in the saw blade. The position of the pointer of the second arm on the scale of the scale arm on the first arm indicates the tension in the saw blade. The tension can be adjusted by means of a screw adapted for changing the distance between the drive wheel and the idler wheel of the band saw machine.

Measuring carried out by means of this known measuring tool is very inaccurate, and a proper adjusting of the tension in the saw blade is therefore not possible. The measuring tool cannot measure the distribution of the tension over the width of the saw blade. Zeroing of the measuring tool cannot take place.

From the U.S. Patent No. 3,492,731 is known another measuring tool for measuring the tension in a saw blade of a band saw machine. The tool has a flat body and two clamps for clamping the tool upon the saw blade at a distance from each other. One of the clamps is immovably fixed on the body while the other one is pivoted to the body and connected with a lever comprising part of a motion amplifying linkage overlying the rear face of the body and connected with a pointer, which is pivotably arranged on the front face upon which a scale is provided.

In using this known tool slack in the saw blade is first taken up. The immovable clamp is then clamped upon the blade while the measuring tool is zeroed by moving the movable clamp to a position in which the pointer is pointing on - off - on the scale on the front side of the body, after which the movable clamp is also clamped upon the saw blade. The position of the pointer on the scale indicates the tension in the saw blade.

The complicated linkage system of this tool and the system's large mechanical gear ratio cause the result of the measuring to be rather inaccurate. The measuring tool moreover cannot measure the distribution of the tension over the width of the saw blade. The zeroing of the measuring tool in the described way takes place with great inaccuracy and zeroing of the measuring tool in itself is not possible. The measuring tool also is slow and difficult to use.

The above-mentioned disadvantages of the prior art measuring tools for measuring tension in a saw blade are according to the present invention remedied by,
in a first aspect of the invention providing a measuring tool of the kind mentioned in the opening paragraph, which has a simple and inexpensive construction,
in a second aspect of the invention providing a measuring tool of the kind mentioned in the opening paragraph, which is adapted for measuring tension in a saw blade more precisely than hitherto known,
in a third aspect of the invention providing a measuring tool of the kind mentioned in the opening paragraph, which is quickly and easy to use,
in a fourth aspect of the invention providing a measuring tool of the kind mentioned in the opening paragraph, by means of which the distribution of tension over the width of the saw blade can be measured,
in a fifth aspect of the invention providing a measuring tool of the kind mentioned in the opening paragraph, which can be precisely zeroed in a quick and easy way,

The novel and unique features of the invention consist in the fact that the clamp holder comprises two bars displaceably or pivotably connected with each other at one end and each equipped, at the other end, with a cantilever arm mounting a clamp, and that the cantilever arms are connected with the gauge by means of their respective tension rods.

This construction is simple and inexpensive and is moreover very reliable in use. Tension in a saw blade can, by using the measuring tool of the invention, now be measured very accurately, especially when the gauge is a load cell.

The precision can moreover be improved by making more measurements and using the average of the measured values as measure result.

By clamping one measuring tool upon an area at the toothed side of the saw blade and another one upon an area at the rear side, it is possible to precisely register the difference between the tension in the two areas and in accordance with that adjust the associated sawing machine until the desired or prescribed value of the tension in the two areas is achieved.

The adjusting of the tension in a saw blade can take place during tightening the saw blade or alternatively during relaxing a tightened saw blade.

Load cells used as gauges can according to the invention be connected to a computer with a display for showing the measured results. The computer also can have a program for automatically calculating the average of a number of measurement values and also the proportion between the tension in the tooth side and the rear side.

Each cantilever arm can, according to the invention, comprise a two-pronged fork, and each clamp can consists of a clamping screw, which is formed with a pointed end and is mounted in a threaded hole in one of the prongs, and also of an opposite tap, which has a pointed, blunt or flat end face and is mounted on the inside of the other prong.

When using the measuring tool a section of the saw blade is inserted in the forks between the clamping screws and taps. Then each clamping screw is tightened. This operation can be performed manually easily and quickly when the clamping screw has a large head.

The above-mentioned construction of the clamps ensure a firm and durable connection between the measuring tool and the saw blade in a way that also allows the clamps to turn somewhat about their axis in relation to the saw blade.

The two bars can, according to the invention, be interconnected by means of at least one hinge, and each clamp can be mounted on the cantilever arm at a distance from the bar of between 50 - 200 mm.

Said hinge allows the two bars to swing about the hinge axis whereby the distance between the clamps changes while the clamps turn a little in relation to the saw blade. The distance between the clamps and the bars ensure a suitable gear ratio between the elongation or shortening of the section of the saw blade to be measured and the consequently swinging of the two bars in relation to each other.

In a preferred embodiment according to the invention, a slit can be formed in an end part of each bar and be extending from the end face into the longitudinal direction of the bar, a plate can be inserted into the slit in both bars, and cross pins can extend crosswise through their respective bars and the plate in a way that allow the bars to swing in relation to each other. An intervening space between the end faces of the bars makes said swinging possible.

The plate in the slits of the bars ensure lateral steadiness in the connection between the two bars.

The tension rods can be permanently attached to the cantilever arms but are in, an advantageous embodiment, detachably connected with the cantilever arms by means of a transversely extending pivot on the cantilever arm and a corresponding eye in the tension rod or vice versa.

This construction allows each tension rod to turn in relation to the associated cantilever arm during changing of the distance between the two clamps.
Another advantage consists in the fact that the measuring of the saw blade can take place irrespective of the temperature of the saw blade contrary to the known technique which require that the saw blade must be cold before beginning of the tension measurements.

In an expedient embodiment according to the invention, the measuring tool can comprise a calliper in form of a calliper rail formed with two calibrating apertures having axes placed at a predetermined distance from each other, whereby the calibrating apertures fit the end parts of the clamping screws of the clamps.

Alternatively, the calliper rail can also be formed with two second calibrating apertures having axes flush with the axis of the first calibrating apertures whereby the second calibrating apertures fit the end parts of the taps of the clamps.

The zeroing of the measure tool takes place by removing the tension rods with the load cell from the cantilever arms, zeroing the load cell, inserting the calliper rail between the clamps and tightening the clamping screws into the calibrating apertures of the calliper rail after which the tension rods with the load cell again are mounted on the cantilever arms while the length of the tension rods is adjusted in such way that the load cell is zeroed and the calliper rail is demounted.

The measuring tool is now calibrated and is in this state ready to be clamped upon a saw blade to be measured.

The calliper of the invention and the above-described way to use the calliper ensures that it will always be the same length of a saw blade, which is measured regardless of whether the saw blade is cold or hot and also that the tensions of the toothed and rear edges of a saw blade can be simultaneously measured by means of two identically calibrated measuring tools.

The invention will be explained in greater detail below, giving further advantageous features and technical effects and describing an exemplary embodiment with reference to the drawing, in which
Fig. 1 is a perspective view of a measuring tool for measuring tension in a saw blade,
Fig. 2 is on a larger scale a fractional top view of the measuring tool shown in fig. 1,
Fig. 3 is a perspective view of two measuring tools clamped upon their respective sides of a fractionally shown saw blade,
Fig. 4 is a perspective view of a computer for connecting to the gauges and showing the results of the measurements on a display,
Fig. 5 is an end view of the measuring tool shown in fig. 1 partly disassembled and a calliper rail for calibrating the measuring tool,
Fig. 6 shows the same, but with the calliper rail clamped in the partly disassembled measuring tool,
Fig. 7 shows the same as in fig. 6 but with the measuring tool in assembled state, and
Fig. 8 shows the calibrated measuring tool.

Many different saw machines use saw blades for cutting objects of many different materials, par example wood, metal, plastic and leather.

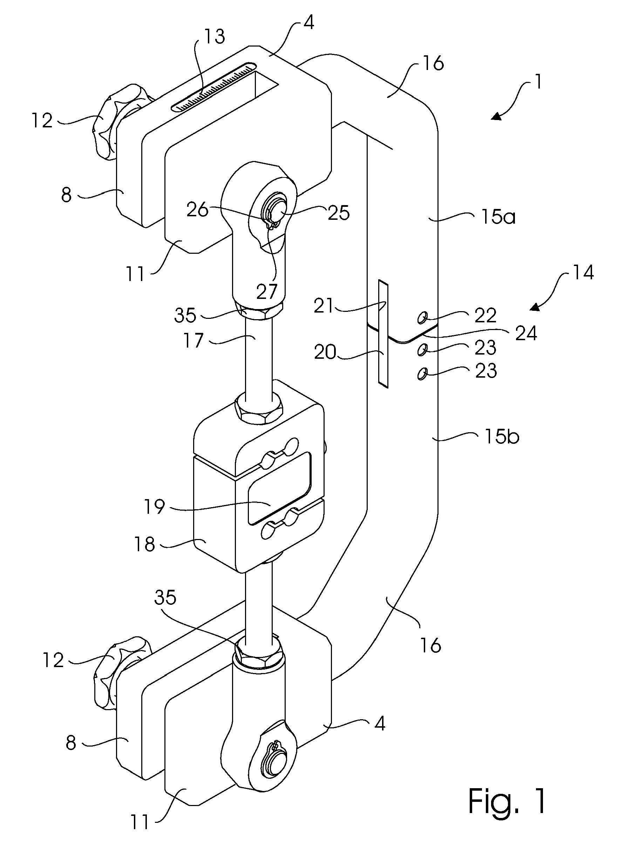

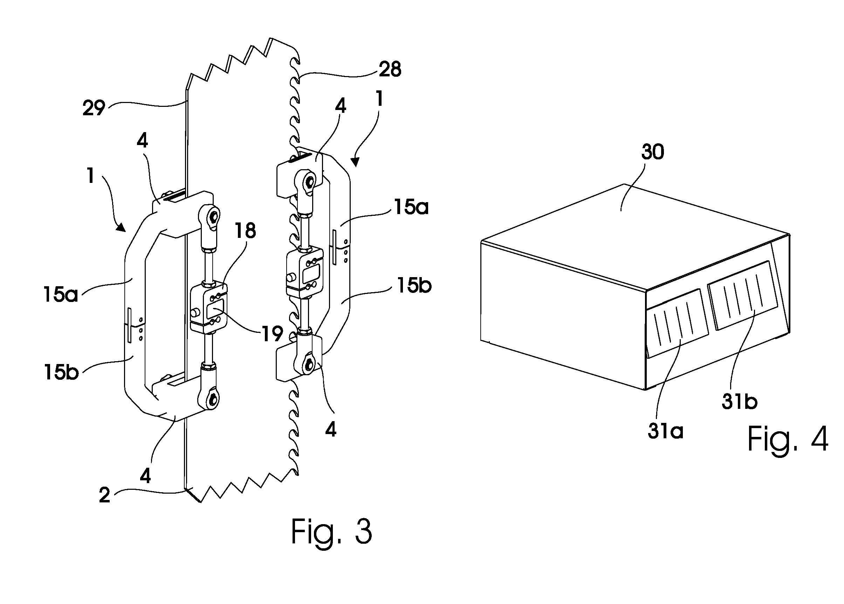

Fig. 1 is a perspective view of a measuring tool 1 for measuring tension in a saw blade and fig. 3 shows in perspective two measuring tools 1 clamped upon their respective sides of a saw blade 2 in a band saw machine (not shown).

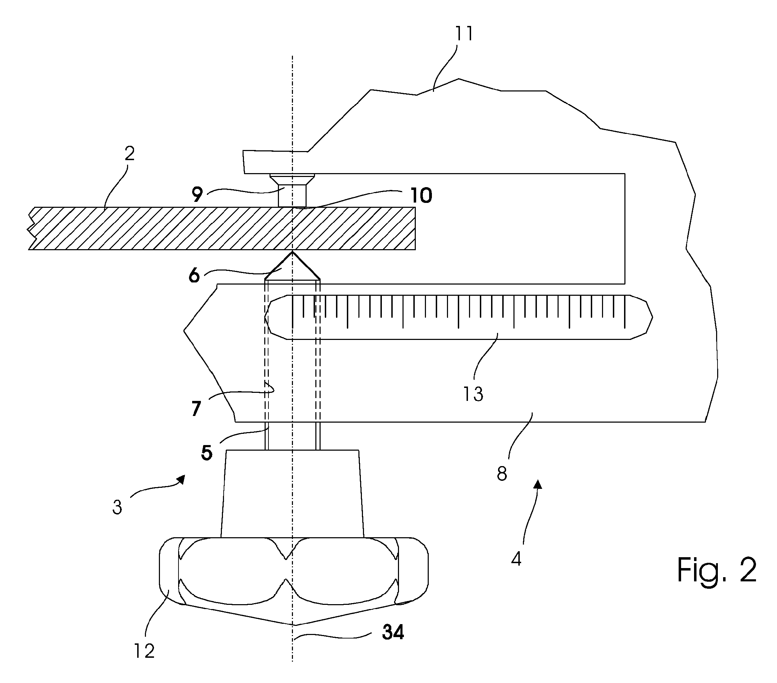

Fig. 2 shows a fragment of one of two clamps 3 for clamping the measuring tool upon the saw blade 2. Each clamp is mounted in a two-pronged fork 4. A clamping screw 5 with a pointed end 6 is screwed into a threaded hole 7 in one of the prongs 8 of the forks 4. An opposite tap 9 with in this case a flat end face 10 is attached on the inside of the other prong 11.

The clamping screw is equipped with a large head 12 allowing the operator to manually clamp the saw blade 2 between the pointed end 6 of the clamping screw 5 and the flat end face 10 of the tap 9. The operator can, on a scale 13 provided on the prong 8, read the position of the saw blade in relation to the fork.

The fork 4 is, as shown in fig. 1, part of a clamp holder 14 comprising two interconnected bars 15a and 15b. On each bar is provided a cantilever arm 16 with the fork 4.

Two tension rods 17 connect a load cell 18 with their respective prong 11 of the fork 4. The load cell is of a known kind and its construction will therefore not be described in detail here. The operator can read the result of the measurements on a display 19 on the load cell.

The two bars 15a,b are connected with each other by means of a plate 20 inserted in slits 21 in the bars and a cross pin 22 extending crosswise through the bar 15a and the plate 20 and two cross pins 23 extending crosswise through the bar 15b and the plate 20.

This construction ensures lateral steadiness in the connection between the two bars 15a, b at the same time as the bar 15a is allowed to turn about the cross pin 22 in relation to the bar 15b owing to the fact that an intervening space 24 between the end faces of the bars 15ab is provided. The distance between the clamps can thereby be changed.

The tension rods 17 are immovably fixed on their respective side of the load cell 18. At the opposite ends, each tension rod is detachably mounted on the prong 11 of the fork 4 by means of a transversely extending pivot 25 on the fork and a corresponding eye 26 formed in an end portion of the tension rod 17.

The load cell 18 is connected with the clamp holder 14 by arranging both tension rods 17 in such way that the pivots 25 on the forks 4 extend through their respective eye 26 of the tension rods 17. A circlip 27 serves for keeping each tension rod in position on the associated cross pivot 25. In mounted position the pivot 25 is allowed to turn in the eye 26 about its axis when the bar 15a is turning about its cross pin 22 during the measurement of the tension in the saw blade 2.

In fig. 3 two identical measuring tools are clamped on their respective side of the saw blade 2. One of these sides is the tooth side 28 and the other one the rear side 29.

The tensions in the saw blade 2 change when tightening or relaxing the saw blade with the consequence that the distance between the clamps changes. Such changing of distance is possible owing to the above-described construction of the connection between the bars 15a and 15b, which allows the bar 15a to turn in relation to the bar 15b.

The changing can be read directly on the display 19 of the load cell or by means of the computer 30 shown in fig. 4. By means of connections (not shown) the computer is connected to both load cells 18. The computer has, in this case, two displays 31a,b. Each display shows the measured values of the tension on either the tooth side 28 or the rear side 29 of the saw blade 2.

A proper working of the saw machine and a proper cutting of wood or metal objects require, as previously mentioned, that the tensions in the saw blade have suitable values and that there is a suitable proportion between the tension on the tooth side 28 and the rear side 29 of the saw blade 2.

Said suitable values and proportions are or can be prescribed for a particular saw machine and a particular saw blade. The operator now only need to regulate the saw machine until the displays 31a,b show that the tensions in the saw blade have achieved the correct values.

It must however be understood that such correct adjusting of the tensions in the saw blade only is possible if the measuring tools 1 has been correctly zeroed.

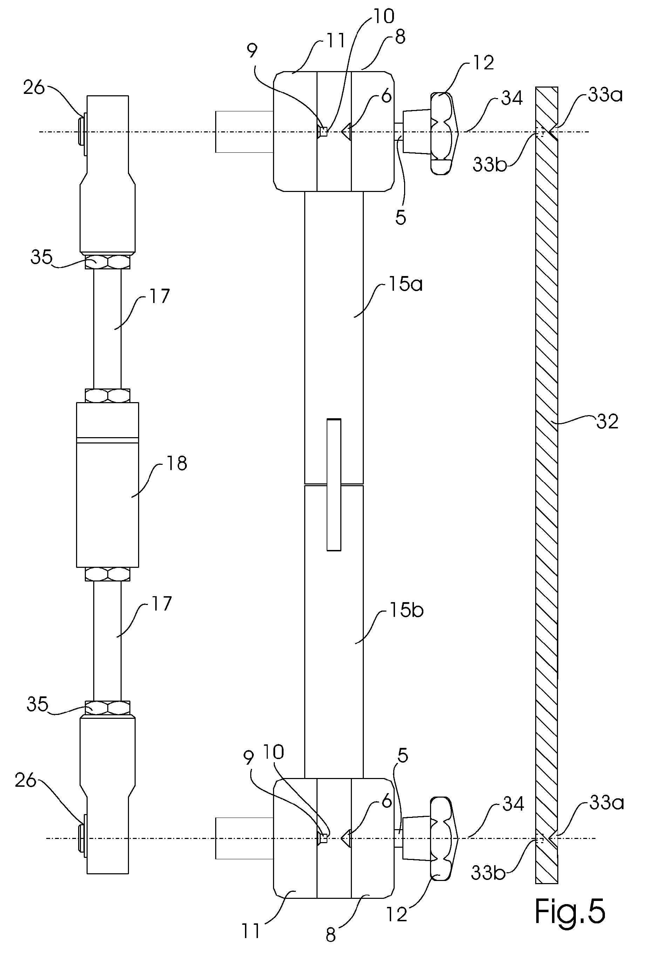

Such correctly zeroing is achieved by means of the method illustrated in figs. 5 - 8 and the calliper rail 32 shown in figs. 5 - 7.

The calliper rail 32 is formed with two calibrating apertures 33a having axes 34 placed at a predetermined distance from each other. The calibrating apertures 33a fit the pointed end parts 6 of the clamping screws 5 of the clamps. The calliper rail 32 may alternatively have opposite apertures 33b fitting the end parts 10 of the taps 9 of the clamps.

The zeroing of the measure tool takes place in the following way with reference to the figures 5 - 8.

Fig. 5 shows that the eyes 26 of the tension rods 17 with the load cell 18 have been removed from the transversely extending pivots 25 on the prong 11 of the fork 4. The load cell 18 is zeroed in this free state. The calliper rail 32 is ready to be placed between the clamping screws 5 and the opposite taps 9 of the clamps.

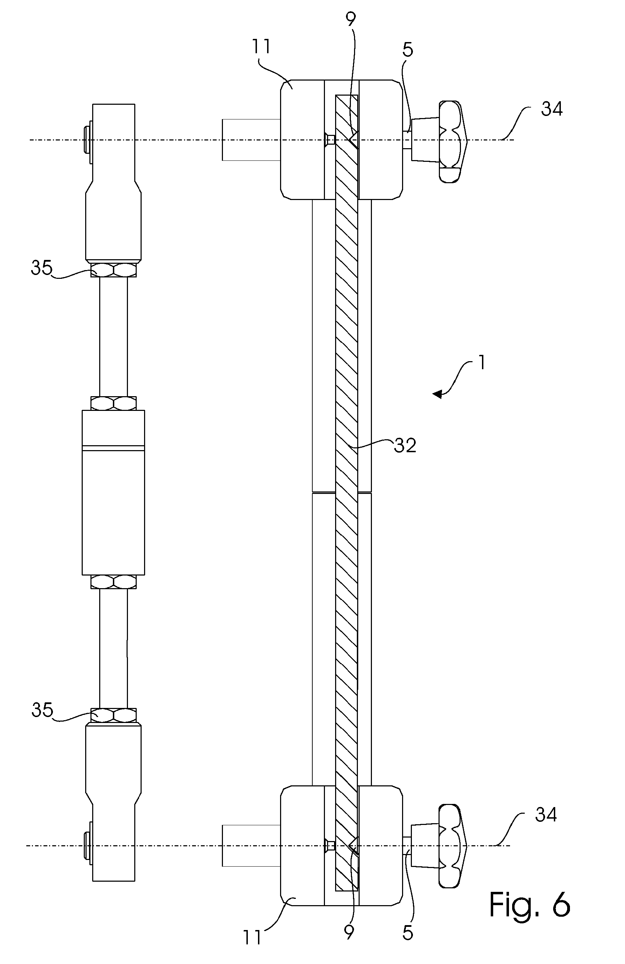

In fig. 6 the calliper rail 32 has been placed between the clamping screws 5 and the taps 9 of the clamps, and the measuring tool 1 has been adjusted in such way that the axis 34 of the calibrating apertures 33a,b is flush with the axis 34 of the clamps, after which the clamping screws 5 are tightened.

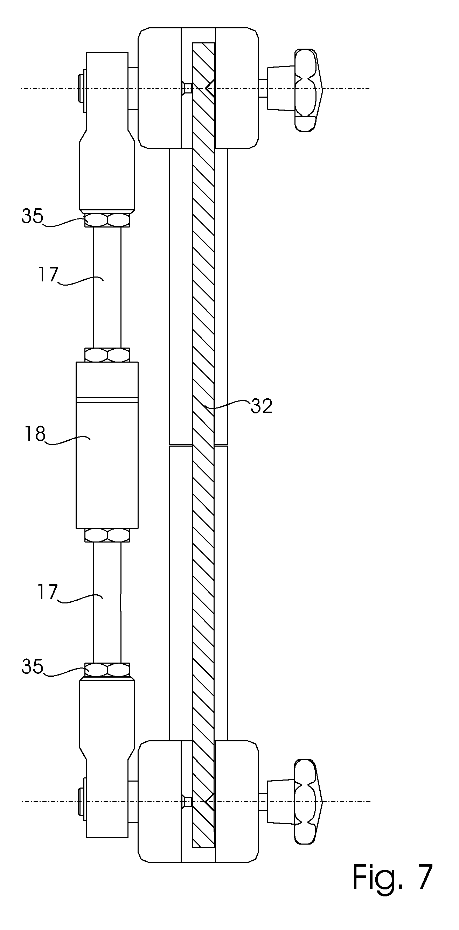

In fig. 7 the eyes 26 of the tension rods 17 have again been mounted upon the transversely extending pivots 25 on the prong 11 of the fork 4 while, when required, adjusting the length of the tension rods 17 by means of screw joints 35 in such way the load cell 18 is zeroed.

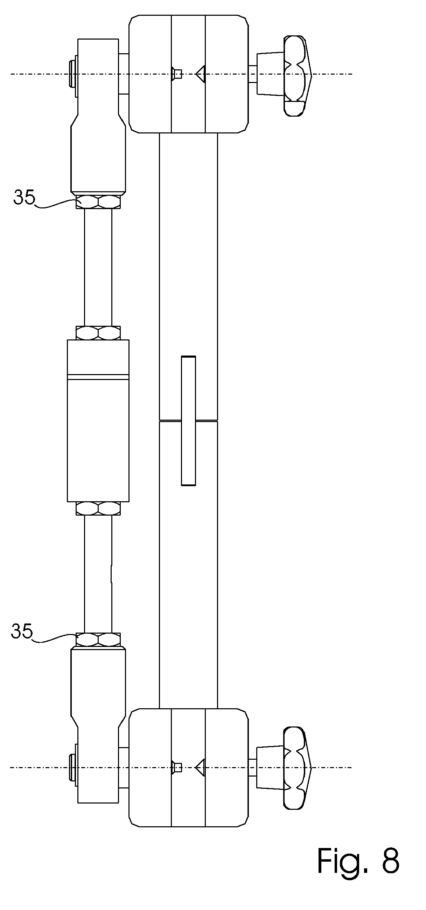

Fig. 8 shows that the calliper rail 32 has been removed from the measuring tool after mounting the tension rods 17 with the load cell 18.

The measuring tool now is calibrated and in this state ready to be clamped upon a saw blade 2, which then is measured while tightening the saw blade or relaxing the tightened saw blade.

The above-described way to calibrate the measuring tool according to the invention effectively ensures that the measuring tool always is consistently and exactly calibrated. This advantage is especially of importance when using two measuring tools for simultaneously measuring the tensions on the tooth side and the rear side of a saw blade.

## Claims

1. A measuring tool for measuring tension in a saw blade (2) and of the kind which comprises
- two clamps (3) for clamping the measuring tool (1) upon the saw blade (2),
- a clamp holder (14) for holding the clamps (3) in a way which allows changing of distance between the clamps (3), and
- a gauge (18) for measuring such chancing,
**characterized in**
- **that** the clamp holder (14) comprises two bars (15a,b) displaceably or pivotally connected at one end with each other
- **that** each of the two bars (15a, b) is equipped with a cantilever arm (16) mounting a clamp (3) at the other end, and
- **that** the cantilever arms (16) are connected with the gauge (18) by means of their respective tension rod (17).

2. A measuring tool according to claim 1, **characterized in that** the gauge (18) is a load cell (18).

3. A measuring tool according to claim 1 or 2, **characterized in that** each cantilever arm (16) comprises a two-pronged fork (4), whereby each clamp (3) consists of a clamping screw (5) which is formed with a pointed end part (6) and mounted in a threaded hole in one of the prongs, and also of an opposite tap which has an end part with a pointed, blunt or flat end face and is mounted on the inside of the other prong.

4. A measuring tool according to claim 1, 2 or 3, **characterized in that** the two bars (15a,b) are interconnected by means of at least one hinge (22,23), and that each clamp (3) is mounted on the cantilever arm (16) at a distance from the bar (15a,b) of between 50 - 200 mm.

5. A measuring tool according to claim 4, **characterized in that** a slit (21), which is formed in an end part of each bar (15a,b), is extending from the end face into the longitudinal direction of the bar (15a,b) whereby a plate (20) is inserted into the slit (21) in both bars (15a,b) and cross pins (22,23) are extending crosswise through their respective bars (15a,b) and the plate (20).

6. A measuring tool according to any of the claims 1 - 5, **characterized in that** the connection between a tension rod (17) and a cantilever arm (16) consists of a transversely extending pivot (25) on the cantilever arm (16) and a corresponding eye (26) in the tension rod (17).

7. A measuring tool according to claim 6, **characterized in that** each tension rod (17) is detachably connected with a cantilever arm (16).

8. A measuring tool according to any of the claims 1 - 7, **characterized in that** the measuring tool (1) comprises a calliper in form of a calliper rail (32) formed with two calibrating apertures (33a) having axes placed at a predetermined distance from each other, whereby the calibrating apertures (33a) fit the end parts of the clamping screws (5) of the clamps (3).

9. A measuring tool according to claim 8, **characterized in that** the calliper rail (32) is formed with two second calibrating apertures (33b) having axes flush with the axes of the first calibrating apertures (33a) whereby the second calibrating apertures (33b) fit the end parts (10) of the taps (9) of the clamps (3).

10. A method for callipering the measuring tool (1) according to claims 1-7 by means of the calliper according to claims 8-9, **characterized in** comprising the steps of
- removing the eyes (26) of the tension rods (17) from the transversely extending pivots (25) on the cantilever arms (16),
- zeroing the gauge (18),
- placing the calliper rail (32) between the clamping screw (5) and the opposite tap of the clamps (3),
- adjusting the measuring tool (1) in such way that the axes of the calibrating apertures (33a,b) are flush with the axes of the clamps (3),
- tightening the clamping screws (5),
- mounting the eyes (26) of the tension rods (17) upon the transversely extending pivots (25) on the cantilever arms (16) while adjusting the length of the tension rods (17) in such way that the gauge (18) is zeroed,
- dislodging the clamping screws (5), and
- removing the calliper rail (32) from the measuring tool (1).

11. A method for measuring tension in a saw blade (2) by using the measuring tool (1) according to claims 1-7, which has been zeroed by means of the calliper according to claims 8-9 and the method according to claim 10, **characterized in that** the method comprises the steps of
- clamping a calibrated measuring tool (1) upon a saw blade (2),
- tightening the saw blade (2) or relaxing a tightened saw blade (2), and
- reading the gauge (18).

12. A method according to claim 11 for measuring the difference between the tensions in an area at the cutting edge (28) and in the area at the back edge of a saw blade (2), **characterized in that** the method comprises the steps of
- clamping a calibrated measuring tool (1) upon the area at the cutting edge (28),
- clamping an identically calibrated measuring tool (1) upon the area at the rear edge (29),
- tightening the saw blade or relaxing a tightened saw blade (2),
- reading the two gauges (18), and
- registering the difference between the readings.

13. A method for measuring tension in a saw blade (2) by using the measuring tool (1) according to claims 1-7, zeroing the measuring tool (1) by means of the calliper according to claims 8-9 and using the method according to claims 10-12, **characterized in** reading the tension by means of a computer (30) which has a display (31a,b) and is connected to the gauge (18).
